# EUROPEAN PATENT SPECIFICATION

(11) **EP 4 150 885 B1**
(45) Date of publication and mention of the grant of the patent: **05.06.2024**
(21) Application number: 21721570.6
(22) Date of filing: 30.04.2021
(51) Int. Cl.: H04L 67/12, H04L 41/082, H04L 41/50, H04L 43/0817, H04L 67/51, H04W 24/02

(54) **NODE CONTROL UNIT**
KNOTENSTEUEREINHEIT
UNITÉ DE COMMANDE DE NOEUD

(30) Priority: 15.05.2020 US 202063025257 P; 28.05.2020 EP 20177200
(43) Date of publication of application: 22.03.2023
(73) Proprietor: Signify Holding B.V., 5656 AE Eindhoven (NL)
(72) Inventor: DEIXLER, Peter, 5656 AE Eindhoven (NL); ERDMANN, Bozena, 5656 AE Eindhoven (NL); ROZENDAAL, Leendert Teunis, 5656 AE Eindhoven (NL)
(74) Representative: Verweij, Petronella Daniëlle
(86) International application number: PCT/EP2021/061487
(87) International publication number: WO 2021/228591

(56) References cited:
- WO-A1-2011/092612
- WO-A1-2019/154999
- US-A1- 2008 198 819
- US-B2- 9 167 423

## Description

### FIELD OF THE INVENTION

The invention is related to a node-control unit, to a corresponding method and corresponding computer program.

### BACKGROUND OF THE INVENTION

US 2019/0028886 A1 discloses a configuration system arranged to configure a first set of wireless network devices or nodes to form a first stand-alone wireless communication network. A configuration device is arranged to wirelessly connect with the first set of wireless network nodes and to transfer the first configuration parameters to the first set of wireless network nodes forming the first stand-alone wireless communication network. The first configuration parameters are selected to be compatible with a future connected wireless network if the first set of wireless network devices and a second set of wireless network devices are placed so that they may be connected to a same network-service device forming a future connected wireless network.

US 9167423B2 discloses a self-organizing mesh network made up of individual devices configured to use other network devices to pass data from one point to another.

### SUMMARY OF THE INVENTION

It would be beneficial to enable an ad-hoc adjustment of the functionality of a network node.

The invention is defined by the appended independent claims. Preferred embodiments are specified by the dependent claims.

It shall be understood that a preferred embodiment of the present invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic block diagram of an embodiment node-control unit in a wireless communication network and an ephemeral network-service device available for connection,
Fig. 2 shows a schematic block diagram of an embodiment wireless communication network and a network-service device,
Fig. 3 shows a schematic block diagram of an embodiment of a wireless network-service device in communication with two different wireless communication networks,
Fig. 4 shows a flow diagram of an embodiment of a method for operating a node-control unit,
Fig. 5 shows a flow diagram of an embodiment of a method for operating a network node, and
Fig. 6 shows a flow diagram of an embodiment of a method for operating a wireless network-service device.

### DETAILED DESCRIPTION OF EMBODIMENTS

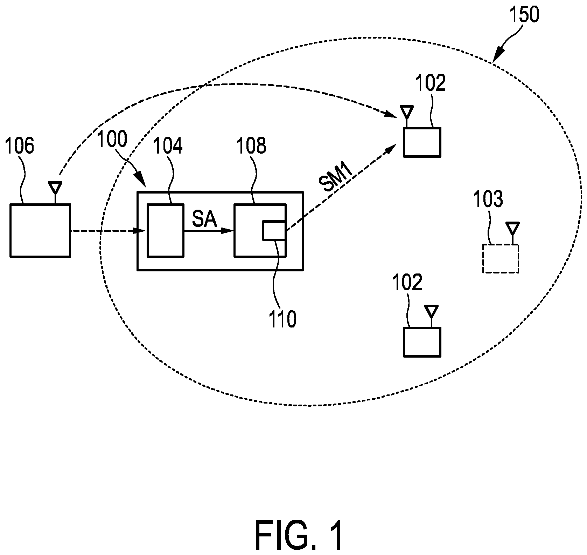

Fig. 1 shows a schematic block diagram of a node-control unit 100 in a wireless communication network 150 and an external ephemeral network-service device 106 available for connection. The node-control unit 100 is suitably configured to set an operation mode of one or more network nodes 102 or 106 of the wireless communication network 150. At least one of the network nodes is configured to operate in a first operation mode OM1 that corresponds to an operation of the at least one network nodes as a network node of the wireless communication network 150 which excludes the network service device 106 and in a second operation mode OM2 which corresponds to an operation of the at least one network node in communication with the network-service device 106, i.e., where the network-service device 106 is part of the wireless communication network.

The node-control unit 100 comprises a network-service-detection unit 104, configured to ascertain whether one or more network-service devices 106, which are currently not part of the wireless communication network, are currently available for entering the wireless communication network, i.e., for communicating with at least one of the network nodes of the wireless communication network, and to provide a service-availability signal SA indicative thereof. The node control unit also comprises an operation-mode setting unit 108 that is configured to control switching of the operation mode of the at least one network node 102 between the first and the second operation mode discussed above. For this purpose, the operation-mode setting unit 108 is configured to receive the service-availability signal SA and, when the service-availability signal is indicative of at least one network-service device being currently available for entering the wireless communication network 150, to provide to at the least one of the network nodes 102 of the wireless communication network 150, via an output interface 110, and in dependence on the service-availability signal SA, a first switch-mode signal SM1 indicative of an instruction to switch the operation mode of the at least one network node 102 from the first operation mode to the second operation mode. Particularly, in this node-control unit, the operation-mode setting unit is configured to determine whether the network-service device 106 providing the request signals is a network-service devices allowed to enter the wireless communication network and to provide an allowance signal indicative thereof. The operation-mode setting unit 108 is also configured to provide the first switch-mode signal also in dependence on the allowance signal, i.e., only when the available network-service device is an allowable network-service device in accordance with a predetermined security criterion, or with a predetermined capability criterion, or with a predetermined performance criterion, etc.

The wireless communication network 150 may be a standalone network or may include a permanent network-service device 103 which is used by the nodes of the network to operate in the first operation mode. The permanent network-service device, for example a permanent gateway device, is thus part of the wireless communication network and not a network-service device as network-service device 106.

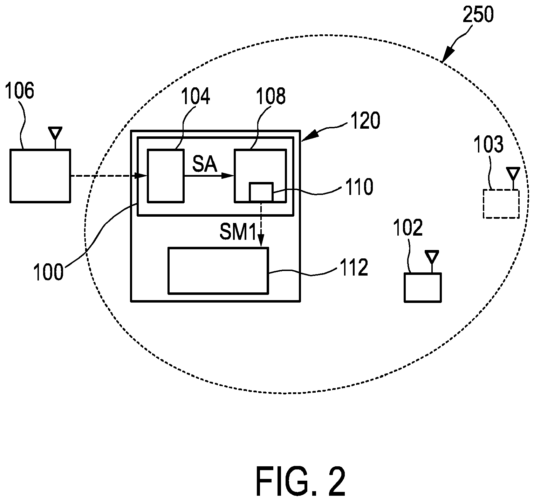

Fig. 2 shows a schematic block diagram of another embodiment wireless communication network 250 and a network-service device 106. The following discussion will mostly refer to those features that are different when compared to the wireless communication network 150 of Fig. 1. In the wireless communication network 250, network node 120 comprises a node-control unit 100 as described with reference to Fig. 1. It also comprises a node-operation unit 112 that is operable in the first and the second operation mode. The node-operation unit is configured to receive the first switch-mode signal SM1 from the node-control unit 100, in particular from the output interface 110 of the operation-mode setting unit 108, and to operate in the first operation mode or in the second operation mode in dependence thereon. In particular, the network node 120, when operating in the second operation mode, is configured to perform one or more of the following functions:
- a commissioning function of at least one node of the wireless communication network;
- a node-validation function for validating a proper connection of at least one node to the wireless communication network;
- a configuration-validation function for validating a proper configuration at least one node of the wireless communication network in accordance with a predetermined configuration criterion;
- a software update function for updating a software used by at least one node of the wireless communication network;
- a firmware update function for updating a firmware used by at least one node of the wireless communication network;
- a fine-tune configuration function for adjusting operation parameters of at least one node of the wireless communication network in the first and in the second operation mode;
- a network node-usage monitoring function, for determining, during a predetermined time span, and providing a node usage information quantity indicative of a cumulated time of operation of at least one node of the wireless communication network;
- a network-operation monitoring function for determining, during a predetermined time span, and providing a network operation information quantity indicative of an error rate of communication within the wireless communication network;
- a node-operation testing function, for testing a predetermined operation functionality of at least one of the nodes of the wireless communication network
- a network cyber-security monitoring function for monitoring traffic patterns within the wireless communication network and detecting target traffic patterns indicative of a presence of a rogue node in accordance with a predetermined rogue-node detection algorithm;
- a presence-sensing function for sensing presence of a subject in a presence-sensing volume associated to the wireless communication network the presence sensing function including determining received signal quality indicator values such as RSSI values of RF signals transmitted within the wireless communication network or channel state indicator of a communication link of the wireless communication network;
- a remote-access function for allowing remote access to the network node by an external device;
- a network-information provision function for ascertaining and providing network-information pertaining to the network nodes currently forming part of the wireless communication network;
- a position determination function, for determining an approximate position of the network-service device; and
- a network-node addition function, for connecting one or more external nodes to the wireless communication network.

Detailed examples of these functions are given above.

In another exemplary wireless communication network (not shown) more than one of the network nodes, and in another example all of the network nodes, comprise a respective node-control unit.

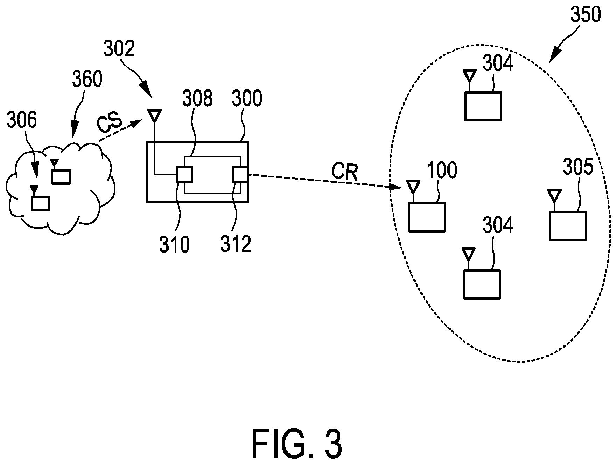

Fig. 3 shows a schematic block diagram of an embodiment of a wireless network-service device 300 in communication with two different wireless communication networks 350, 360. Wireless communication network 360 is, in this particular example the Internet, to which the wireless network-service device 300 is connected via, e.g., a WiFi or a 3G/4G or 5G router. The wireless network-service device 300 comprises a wireless communication unit, such as a transceiver unit 302 that is configured to receive and provide wireless messages from and to network nodes 304, 306 belonging to the one or more wireless communication networks to which the wireless network-service device is communicatively connected. The wireless network-service device 300 also comprises a network-connection control unit 308 that is configured determine that at least one network nodes of the target wireless communication network is currently in a first operation mode as a network node of the target wireless communication network in a first network configuration, which excludes the network-service device from the target wireless communication network or in a second operation mode as a network node of the target communication network in a second network configuration, which includes the at least one network-service device in the target wireless communication network, and to wirelessly communicate with one or more network nodes of the target communication network currently operating in the second operation mode.

In the exemplary network-service device 300 of Fig. 3, the network connection unit 308 is configured to receive, via an input interface 310, a connect-signal CS indicative of an instruction to connect to a target wireless communication network 350 to which the wireless network-service device is not currently connected. In the network-service device 300 the connect-signal is a wireless signal transmitted from the network 360 and received via the wireless communication unit. In an alternative network-service device (not shown), the input interface is a user interface, such as a button or a touch screen or an actuator that the user actuates or operates to provide the connect-signal, which in this particular case is an electrical signal generated inside the network-service device.

The network-connection control unit is also configured to provide, via an output interface 312, and to at least one node-control unit 100 of the target wireless communication network 350, a connect-request signal CR indicative of a request for acceptance in the target wireless communication network. As explained above with reference to Figs. 1 and 2, the node-control unit interprets the reception of the connect-request signal as an indication that the network-service device 300 is currently available for entering the wireless communication network 350. Preferably, the node-control unit also checks whether the wireless device 300 is trustworthy and should be allowed into the wireless communication network 350. Preferably this is done with the aid of a network-control device 306 that is configured to provide to the network-service device 300 security credential data pertaining to the target wireless communication data 350. The network-service device is then configured to provide the connect-request signal using the security credential data received.

Once the first switch-mode signal is received, the network node switches its operation mode from the first to the second operation mode, for instance to perform any one or more of the functions described above. The network-service device 300, upon connecting to the target wireless communication network, is configured to communicatively cooperate with one or more network nodes of the target communication network for operating the one or more network nodes in the second operation.

The wireless communication network 350 comprises, in addition to the control-node unit 100, further network nodes 304. Optionally, the wireless communication network may comprise an additional network-service device 305, either a permanent network-service device or a second ephemeral wireless network-service device, similar to the wireless network-service device, which is currently also supporting operation of the wireless communication network 350.

Suitable wireless communication networks include, but are not limited to lighting networks comprising lighting nodes and sensors controllable via a suitable wireless communication protocol such as, but not limited to Zigbee, BLE or WiFi.

The use of peripheral network-service devices is particularly suitable for integration of lighting systems with, for example, voice control. Currently it is a typical policy of a building infrastructure owner to offer lighting system in combination with voice control. However, while certain office users do want voice control, others do not like to have voice control present in their office due to, for example, privacy concerns. This would require the temporary removal of the voice assistant speaker from the office based on the request of the tenant/user and hence the lighting network. In flexible working areas this may even happen on a daily basis. All the lighting devices may stop all the activities related to the gateway-requiring use cases, e.g. reporting occupancy or energy consumption data once the voice-assistant has left the network.

The combined use of a node-control unit, and a suitable network-service device reduces the complexity of temporarily enhancing a connect-ready system with a gateway for an initial installation, using ephemeral network-service devices on demand for the purpose of reconfiguring or updating the system or temporarily connecting multiple subsystems/extending an existing lighting system without the need to completely reconfigure the system.

For example, the product lifecycles of voice assistants and wireless lights are typically very different. While lights are configured to remain in the ceiling for over 10 years, often until they break, voice assistants are consumer electronics which are likely replaced by the user to a new device after max. 5 years. Hence, it is important that the user can freely remove or exchange the voice assistant devices over the lifetime of the office lighting or hue DLC (Direct Light Control) installation without affecting the hue DLC core lighting functionality.

Currently, past learnings are lost if the voice assistant, used as a peripheral gateway-device is replaced, certainly if the replacement peripheral network-service device comes from a different vendor. An advantageous node-control unit is suitably configured to store certain information obtained from the original peripheral network-service device and share this information with the replacement peripheral network-service device. For instance, the network node, e.g., DLC lights, may share recommendations to which of the lights of the DLC installation the peripheral gateway should connect to for maximum reliability of the BLE connection between the peripheral gateway and the Zigbee light. In addition, also information about conflicts and conflict mitigation strategies between a first peripheral network-service device and a second peripheral network-service device, which may remain still in place, may be provided by the node-control unit to the new peripheral gateway. This sharing is advantageous as the network-service devices typically do not interact with each other to arbitrate problems associated with two peripheral gateways wanting to control the same lights.

Other network-control nodes are additionally or alternatively configured to share with a connecting ephemeral gateway the list of devices present on the network, with relevant Zigbee ID's and information including application information such as light names, rooms/grouping, dedicated functions, etc.

There may be situations, where the living room of a home features a voice-control device and a first hue DLC lighting system. A second hue DLC system is installed in the adjacent bedroom, where however no voice-control device is present in the bedroom due to privacy reasons. The second hue DLC system may be comprised of a wall switch and two lights and the end-user never uses his smartphone app to control the lighting after the initial setup. The hue application is well aware that in there are two independent hue DLC systems present in the same house, and knows that only the first hue DLC system can be reached via the voice-control device from the cloud. If there is a safety critical firmware update for the lights in the bedroom, the hue system may request assistance from the voice-control device in the living room. In this case, the voice control device may become simultaneously a peripheral gateway of a first hue DLC lighting network and of a second DLC lighting network. The first and second DLC network act as completely independent networks, preferably with different security key and/or channel. In this case, while the voice-control device is upgrading the firmware of the second DLC network, it is still able for voice control, at least with low latency, the first hue DLC lights.

If running the two networks in parallel proves not feasible the voice-control device as a network-service device is advantageously configured to temporarily to join the bedroom network, perform the OTAU, and then return to the original network. Since the OTAU may take some time, this could be run at night, or during the daytime when no one is present.

The lighting devices in the standalone network may behave differently whether or not a network-service device (e.g. voice assistant) is present. For instance, if a network-service device is present, the lights may perform highly granular RF-sensing (incl. people counting), which adds to the network load and power consumption of the lighting devices. If the peripheral gateway is not present, the lighting devices may fall back to the basic functionality (e.g. RF sensing only for occupancy detection or soft-security alone) and stop (or reduce) all the activities related to the gateway-requiring use cases (e.g. people counting or energy consumption data) once the voice-assistant has left the network since there would be no consumer of any such rich data which is collected. The lighting devices may switch mode right after the voice assistant has left the network or continue for a while in the case the peripheral gateway (e.g. NEST security camera) returns or gradually reduce the efforts.

When installing a standalone system without a permanent gateway, a certain peripheral network-service device, e.g. in a form of a smartphone or laptop, is suitably allowed to perform certain well-defined actions (such as reconfiguration, diagnostics, management, SW upgrade) when it connects to the network. In some cases, the identity (configuration, addresses) of the peripheral gateway are known, e.g. when the gateway is a dedicated box or e.g. a gateway robot/drone or a dedicated phone of the facility manager, which only once in a while is brought into the network, e.g. to change network configuration, check the network/device health, collect usage data or provide OTA upgrade. The network-service device may be single purpose i.e. the facility manager connects it and it just can do OTAU and no lighting control or re-commissioning is possible. The same network-service device when used by an authorized installer may allow for re-commissioning and read of granular occupancy data.

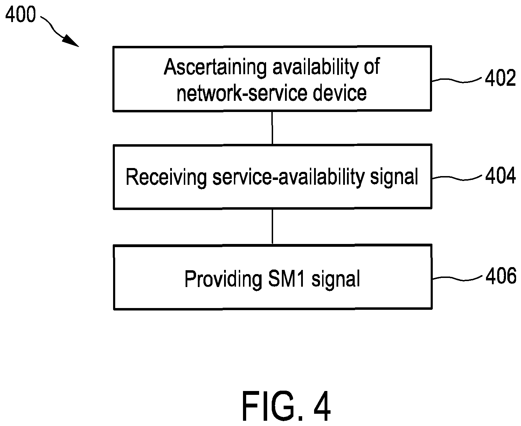

Fig. 4 shows a flow diagram of an embodiment of a method 400 for operating a node-control unit for setting an operation mode of one or more network nodes of a wireless communication network. The method comprises, in a step 402, ascertaining that one or more network-service devices, which are currently external to the wireless communication network are currently available for communication with at least one of the network nodes of the wireless communication network and providing a service-availability signal indicative thereof. The method also comprises, in a step 404, receiving the service-availability signal and, in response thereof, in a step 406 generating and to providing a first switch-mode signal indicative of an instruction to switch the operation mode of the at least one network node from a first operation mode of the at least one network node as a network node of the wireless communication network in a first network configuration, which excludes the network-service device to a second operation mode of the at least one network node as a network node of the wireless communication network in a second network configuration, which includes the at least one network-service device.

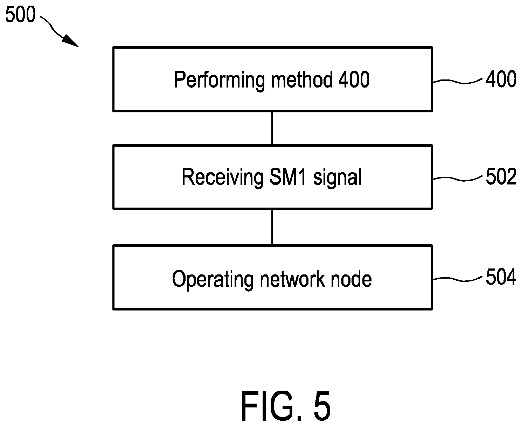

Fig. 5 shows a flow diagram of an embodiment of a method 500 for operating a network node. The method for operating a network node, comprises, performing the method 400 described with reference to Fig. 4. The method also comprises, in a step 502, receiving the first switch-mode signal and in a step 504, operating the network node in the first operation mode or in the second operation mode in dependence of the first switch-mode signal.

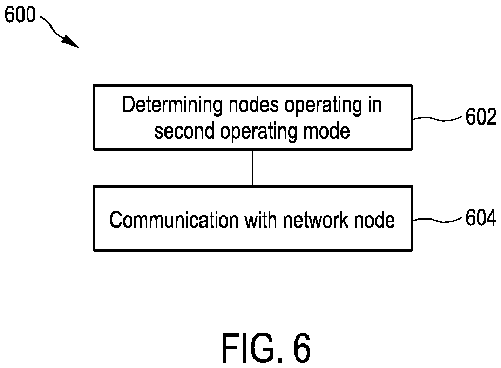

Fig. 6 shows a flow diagram of an embodiment of a method 600 for operating a wireless network-service device for operation in one or more different wireless communication networks. The method comprises, in a step 602, determining that at least one network node of the target wireless communication network is currently in a first operation mode as a network node of the target wireless communication network in a first network configuration, which excludes the network-service device from the target wireless communication network or in a second operation mode as a network node of the target communication network in a second network configuration, which includes the at least one network-service device in the target wireless communication network; and, in a step 604 wirelessly communicating with the at least one network node currently in the second operation mode.

In summary, the invention relates to a node-control unit for setting an operation mode of one or more network nodes of a wireless communication network. It comprises a network-service-detection unit, for ascertaining whether an network-service device is currently available for communicating with the wireless communication network, and to provide a service-availability signal indicative thereof, and an operation-mode setting unit configured to receive the service-availability signal and, to generate and provide based thereon, a first switch-mode signal to at least one network node indicative of an instruction to switch the operation mode from a first operation mode where the network node acts as a node of the wireless communication network to a second operation mode wherein the network node is in communication with the network-service device thereby enabling an ad-hoc adjustment of the functionality of the network node.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A node-control unit (100) for a network node and for setting an operation mode of one or more network nodes (102) of a wireless communication network (150), the node-control unit comprising:
- a network-service-detection unit (104), which is configured to ascertain a current availability of one or more network-service devices (106), which are currently external to the wireless communication network, for communication with at least one of the network nodes of the wireless communication network and for thus becoming part of the wireless communication network, and to provide a respective service-availability signal (SA) indicative thereof;
- an operation-mode setting unit (108) configured to control switching of an operation mode of at least one of the network nodes of the wireless communication network between:
- a first operation mode (OM1) of the at least one network node as a network node of the wireless communication network in a first network configuration, which excludes the respective network-service device from the wireless communication network; and
- a second operation mode (OM2) of the at least one network node as a network node of the wireless communication network in a second network configuration, which includes respective network-service device in the wireless communication network; wherein the one or more network-service devices (106) is configured to perform in communication with the one or more network nodes (102), operating in the second operation mode, a commissioning function of at least one network node of the wireless communication network;
wherein
- the operation-mode setting unit (108) is further configured, in response to receiving the respective service-availability signal (SA), to generate and to provide, via an output interface (110), a corresponding first switch-mode signal (SM1) to at least one of the one or more network nodes of the wireless communication network, the first switch-mode (SM1) signal being indicative of an instruction to switch the operation mode of the at least one network node from the first operation mode to the second operation mode with respect to the given network-service device.

2. The node-control unit of claim 1, wherein the operation-mode setting unit is further configured:
- to ascertain service-allowance information indicative of one or more network-service devices that are capable of connecting to at least one network node of the wireless communication network and that are allowed to join the wireless communication network;
- to determine, using the service-allowance information, whether the one or more network-service devices currently available for communicating with at least one of the network nodes of the wireless communication network are network-service devices allowed to enter the wireless communication network, and to provide an allowance signal indicative thereof; and
- to provide the first switch-mode signal also in dependence on the allowance signal.

3. The node-control unit of claims 1 or 2, wherein:
- the network-service-detection unit is configured to determine whether at least one of the network-service devices is currently connected to the wireless communication network and to provide a respective service-connected signal indicative thereof; and wherein
- the operation-mode-setting unit is configured to provide to at least one of the nodes of the wireless communication network, via the output interface, a second switch-mode signal (SM2) indicative of an instruction to switch the operation mode of the at least one network node from the second operation mode (OM2) to the first operation mode (OM1) when the respective service-connected signal is indicative of the network-service device not being currently connected to the communication network.

4. The node-control unit of any of the preceding claims, further comprising:
- a node-identification data ascertainment unit configured to ascertain node-identification data indicative of at least one of the network nodes that currently form part of the wireless communication network;
- a storage-unit configured to store the ascertained node-identification data; and
- a network-service-device update unit which is configured to provide, upon receiving a predetermined enabling instruction, the stored node-identification data to the network-service device.

5. The node-control unit of any of the preceding claims, further comprising:
- a network-operation data ascertainment unit configured to ascertain network-operation data indicative of communication processes between the network nodes and a first network-service device that is connected to the wireless communication network;
- a storage-unit configured to store the ascertained network-operation data; and
- a network-service-device update unit configured to, upon receiving a predetermined enabling instruction, to provide the stored network-operation data to a second network-service device different from the first network-service device.

6. A network node (120), comprising;
- a node-control unit (100) according to any of the preceding claims;
- a node-operation unit (112) operable in the first and the second operation mode, the node-operation unit configured to receive the first switch-mode signal from the node-control unit and to operate in the first operation mode or in the at least one second operation mode with respect to a respective available network-service device in dependence thereon;
wherein the node-operation unit (112) is configured to perform, when operating in the second operation mode, a commissioning function of at least one network node of the wireless communication network.

7. The network node of claim 6, wherein the node-operation unit is configured to perform, when operating in the second operation mode, one or more of the following functions:
- a node-validation function for validating a proper connection of at least one network node to the wireless communication network in accordance with a predetermined connection criterion;
- a configuration-validation function for validating a proper configuration at least one network node of the wireless communication network in accordance with a predetermined configuration criterion;
- a software update function for updating a software used by at least one network node of the wireless communication network;
- a firmware update function for updating a firmware used by at least one network node of the wireless communication network;
- a fine-tune configuration function for adjusting operation parameters of at least one network node of the wireless communication network in the first or second operation mode;
- a network node-usage monitoring function, for determining, during a predetermined time span, and providing node usage information quantity indicative of a cumulated time of operation and consumed network bandwidth of at least one network node of the wireless communication network;
- a network-operation monitoring function for determining, during a predetermined time span, and providing a network operation quantity indicative of an error rate of communication within the wireless communication network;
- a node-operation testing function, for testing a predetermined operation functionality of at least one of the nodes of the wireless communication network
- a network cyber-security monitoring function for monitoring traffic patterns within the wireless communication network and detecting target traffic patterns indicative of a presence of a rogue node in accordance with a predetermined rogue-node detection algorithm;
- a presence-sensing function for sensing presence of a subject in a presence-sensing volume associated to the wireless communication network, the presence sensing function including determining received signal-quality indicator values of;
- a remote-access function for allowing remote access to the network node by an external device;
- a network-information provision function for ascertaining and providing network-information pertaining to the network nodes currently forming part of the wireless communication network;
- a position determination function, for determining an approximate position of the network-service device;
- a network-node addition function, for connecting one or more external nodes to the wireless communication network, and
- an asset-tracking function, for tracking location of one or more target devices using beacon signals provided by the target devices in accordance with a predetermined communication protocol.
- an indoor positioning service function using beacon signals provided by the network devices.

8. A wireless communication network (350) comprising:
- at least one node-control unit (100) according to any one of the claims 1 to 5;
- one or more network nodes (304) comprising an operation unit configured to receive the first switch-mode from the node-control unit and to operate in the first operation mode or in the second operation mode in dependence thereon; and
- at least one wireless network-service device (300).

9. The wireless communication network of claim 8, further comprising:
- a network-control device (306) configured to provide to the at least one network-service device security-credential data indicative of an allowance to join the target wireless communication network; and wherein
- the network-service device is configured to provide the connect-request signal using the security credential data received.

10. A method (400) for operating a node-control unit for setting an operation mode of one or more network nodes of a wireless communication network, the method comprising:
- ascertaining (402) that one or more network-service devices, which are currently external to the wireless communication network are currently available for communication with at least one of the network nodes of the wireless communication network and providing a service-availability signal indicative thereof;
- in response to receiving (404) the service-availability signal;
- generating and providing (406), a first switch-mode signal indicative of an instruction to switch the operation mode of the at least one network node from a first operation mode of the at least one network node as a network node of the wireless communication network in a first network configuration, which excludes the network-service device to a second operation mode of the at least one network node as a network node of the wireless communication network in a second network configuration, which includes the at least one network-service device; wherein the one or more network-service devices (106) is configured to perform in communication with the one or more network nodes (102), operating in the second operation mode, a commissioning function of at least one network node of the wireless communication network.

11. A method (500) for operating a network node, comprising;
- performing the method (400) of claim 10;
- receiving (502) the first switch-mode signal;
- operating (504) the network node in the first operation mode or in the second operation mode in dependence of the first switch-mode signal.

12. A computer program comprising instructions that, when the program is executed by a computer, cause the computer to carry out the method of any one of the claims 10 to 11.

## Patentansprüche

1. Knotensteuereinheit (100) für einen Netzwerkknoten und zum Einstellen eines Betriebsmodus eines oder mehrerer Netzwerkknoten (102) eines drahtlosen Kommunikationsnetzwerks (150), die Knotensteuereinheit umfassend:
- eine Netzwerkdienstdetektionseinheit (104), die konfiguriert ist, um eine derzeitige Verfügbarkeit einer oder mehrerer Netzwerkdienstvorrichtungen (106), die derzeit extern des drahtlosen Kommunikationsnetzwerks sind, für eine Kommunikation mit mindestens einem der Netzwerkknoten des drahtlosen Kommunikationsnetzwerks und um somit Teil des drahtlosen Kommunikationsnetzwerks zu werden, zu ermitteln und um ein jeweiliges Dienstverfügbarkeitssignal (SA) bereitzustellen, das dieses angibt;
- eine Betriebsmoduseinstelleinheit (108), die konfiguriert ist, um ein Umschalten eines Betriebsmodus mindestens eines der Netzwerkknoten des drahtlosen Kommunikationsnetzwerks zu steuern zwischen:
- einem ersten Betriebsmodus (OM1) des mindestens einen Netzwerkknotens als ein Netzwerkknoten des drahtlosen Kommunikationsnetzwerks in einer ersten Netzwerkkonfiguration, die die jeweilige Netzwerkdienstvorrichtung von dem drahtlosen Kommunikationsnetzwerk ausschließt; und
- einem zweiten Betriebsmodus (OM2) des mindestens einen Netzwerkknotens als ein Netzwerkknoten des drahtlosen Kommunikationsnetzwerks in einer zweiten Netzwerkkonfiguration, die die jeweilige Netzwerkdienstvorrichtung in dem drahtlosen Kommunikationsnetzwerk einschließt; wobei die eine oder die mehreren Netzwerkdienstvorrichtungen (106) konfiguriert sind, um in Kommunikation mit dem einen oder den mehreren Netzwerkknoten (102), die in dem zweiten Betriebsmodus in Betrieb sind, eine Inbetriebnahmefunktion mindestens eines Netzwerkknotens des drahtlosen Kommunikationsnetzwerks durchzuführen;
wobei
- die Betriebsmoduseinstelleinheit (108) ferner konfiguriert ist, als Reaktion auf ein Empfangen des jeweiligen Dienstverfügbarkeitssignals (SA), um, über eine Ausgabeschnittstelle (110), ein entsprechendes erstes Modus-umschalten-Signal (SM1) an mindestens einen des einen oder der mehreren Netzwerkknoten des drahtlosen Kommunikationsnetzwerks zu erzeugen und bereitzustellen, wobei das erste Modus-umschalten(SM1)-Signal eine Anweisung, den Betriebsmodus des mindestens einen Netzwerkknotens von dem ersten Betriebsmodus in den zweiten Betriebsmodus in Bezug auf die gegebene Netzwerkdienstvorrichtung umzuschalten, angibt.

2. Knotensteuereinheit nach Anspruch 1, wobei die Betriebsmoduseinstelleinheit ferner konfiguriert ist:
- zum Bestimmen von Diensterlaubnisinformationen, die eine oder mehrere Netzwerkdienstvorrichtungen angeben, die zum Verbinden mit mindestens einem Netzwerkknoten des drahtlosen Kommunikationsnetzwerks in der Lage sind und denen es erlaubt ist, dem drahtlosen Kommunikationsnetzwerk beizutreten;
- zum Bestimmen, unter Verwendung der Diensterlaubnisinformationen, ob die eine oder die mehreren Netzwerkdienstvorrichtungen, die derzeit für die Kommunikation mit mindestens einem der Netzwerkknoten des drahtlosen Kommunikationsnetzwerks verfügbar sind, Netzwerkdienstvorrichtungen sind, denen es erlaubt ist, in das drahtlose Kommunikationsnetzwerk einzutreten, und zum Bereitstellen eines Erlaubnissignals, das dieses angibt; und
- zum Bereitstellen des ersten Modus-umschalten-Signals ebenso in Abhängigkeit von dem Erlaubnissignal.

3. Knotensteuereinheit nach Anspruch 1 oder 2, wobei:
- die Netzwerkdienstdetektionseinheit konfiguriert ist, um zu bestimmen, ob mindestens eine der Netzwerkdienstvorrichtungen derzeit mit dem drahtlosen Kommunikationsnetz verbunden ist und um ein entsprechendes Dienst-verbunden-Signal bereitzustellen, das dieses angibt; und wobei
- die Betriebsmoduseinstelleinheit konfiguriert ist, um an mindestens einen der Knoten des drahtlosen Kommunikationsnetzwerks, über die Ausgabeschnittstelle, ein zweites Modus-umschalten-Signal (SM2) bereitzustellen, das eine Anweisung angibt, den Betriebsmodus des mindestens einen Netzwerkknotens von dem zweiten Betriebsmodus (OM2) in den ersten Betriebsmodus (OM1) umzuschalten, wenn das jeweilige Dienst-verbunden-Signal angibt, dass die Netzwerkdienstvorrichtung derzeit mit dem Kommunikationsnetzwerk nicht verbunden ist.

4. Knotensteuereinheit nach einem der vorstehenden Ansprüche, ferner umfassend:
- eine Knotenidentifikationsdatenermittlungseinheit, die konfiguriert ist, um Knotenidentifikationsdaten zu ermitteln, die mindestens einen der Netzwerkknoten, die derzeit Teil des drahtlosen Kommunikationsnetzwerks bilden, angeben;
- eine Speichereinheit, die konfiguriert ist, um die ermittelten Knotenidentifikationsdaten zu speichern; und
- eine Netzwerkdienstvorrichtungsaktualisierungseinheit, die konfiguriert ist, um bei dem Empfangen einer zuvor bestimmten Aktivierungsanweisung die gespeicherten Knotenidentifikationsdaten an die Netzwerkdienstvorrichtung bereitzustellen.

5. Knotensteuereinheit nach einem der vorstehenden Ansprüche, ferner umfassend:
- eine Netzwerkbetriebsdatenermittlungseinheit, die konfiguriert ist, um Netzwerkbetriebsdaten zu ermitteln, die Kommunikationsprozesse zwischen den Netzwerkknoten und einer ersten Netzwerkdienstvorrichtung, die mit dem drahtlosen Kommunikationsnetz verbunden ist, angeben;
- eine Speichereinheit, die konfiguriert ist, um die ermittelten Netzwerkbetriebsdaten zu speichern; und
- eine Netzwerkdienstvorrichtungsaktualisierungseinheit, die konfiguriert ist, um bei dem Empfangen einer zuvor bestimmten Aktivierungsanweisung die gespeicherten Netzwerkbetriebsdaten an eine zweite Netzwerkdienstvorrichtung, die sich von der ersten Netzwerkdienstvorrichtung unterscheidet, bereitzustellen.

6. Netzwerkknoten (120), umfassend;
- eine Knotensteuereinheit (100) nach einem der vorstehenden Ansprüche;
- eine Knotenbetriebseinheit (112), die in dem ersten und dem zweiten Betriebsmodus betriebsfähig ist, wobei die Knotenbetriebseinheit konfiguriert ist, um das erste Modus-umschalten-Signal von der Knotensteuereinheit zu empfangen und um in dem ersten Betriebsmodus oder in dem mindestens einen zweiten Betriebsmodus in Bezug auf eine jeweilige verfügbare Netzwerkdienstvorrichtung in Abhängigkeit davon in Betrieb zu sein;
wobei die Knotenbetriebseinheit (112) konfiguriert ist, um, wenn sie in dem zweiten Betriebsmodus in Betrieb ist, eine Inbetriebnahmefunktion mindestens eines Netzwerkknotens des drahtlosen Kommunikationsnetzwerks durchzuführen.

7. Netzwerkknoten nach Anspruch 6, wobei die Knotenbetriebseinheit konfiguriert ist, um, wenn sie in dem zweiten Betriebsmodus in Betrieb ist, eine oder mehrere der folgenden Funktionen durchzuführen:
- eine Knotenvalidierungsfunktion zum Validieren einer ordnungsgemäßen Verbindung mindestens eines Netzwerkknotens mit dem drahtlosen Kommunikationsnetzwerk gemäß einem zuvor bestimmten Verbindungskriterium;
- eine Konfigurationsvalidierungsfunktion zum Validieren einer ordnungsgemäßen Konfiguration mindestens eines Netzwerkknotens des drahtlosen Kommunikationsnetzwerks gemäß einem zuvor bestimmten Konfigurationskriterium;
- eine Softwareaktualisierungsfunktion zum Aktualisieren einer Software, die durch mindestens einen Netzwerkknoten des drahtlosen Kommunikationsnetzwerks verwendet wird;
- eine Firmwareaktualisierungsfunktion zum Aktualisieren einer Firmware, die durch mindestens einen Netzwerkknoten des drahtlosen Kommunikationsnetzwerks verwendet wird;
- eine Feinabstimmungskonfigurationsfunktion zum Anpassen von Betriebsparametern mindestens eines Netzwerkknotens des drahtlosen Kommunikationsnetzwerks in dem ersten oder dem zweiten Betriebsmodus;
- eine Netzwerkknotenverwendungsüberwachungsfunktion zum Bestimmen, während einer zuvor bestimmten Zeitspanne, und Bereitstellen einer Knotenverwendungsinformationsmenge, die eine kumulierte Betriebszeit und verbrauchte Netzwerkbandbreite mindestens eines Netzwerkknotens des drahtlosen Kommunikationsnetzwerks angibt;
- eine Netzwerkbetriebsüberwachungsfunktion zum Bestimmen, während einer zuvor bestimmten Zeitspanne, und Bereitstellen einer Netzwerkbetriebsmenge, die eine Fehlerrate der Kommunikation innerhalb des drahtlosen Kommunikationsnetzwerks angibt;
- eine Knotenbetriebstestfunktion zum Testen einer zuvor bestimmten Betriebsfunktionalität mindestens eines der Knoten des drahtlosen Kommunikationsnetzwerks
- eine Netzwerkcybersicherheitsüberwachungsfunktion zum Überwachen von Verkehrsmustern innerhalb des drahtlosen Kommunikationsnetzwerks und Detektieren von Zielverkehrsmustern, die eine Anwesenheit eines Rogue-Knotens gemäß einem zuvor bestimmten Rogue-Knotendetektionsalgorithmus angeben;
- eine Anwesenheitserfassungsfunktion zum Erfassen der Anwesenheit eines Subjekts in einem Anwesenheitserfassungsvolumen, das dem drahtlosen Kommunikationsnetzwerk zugeordnet ist, wobei die Anwesenheitserfassungsfunktion das Bestimmen empfangener Signalqualitätsangabewerte einschließt von;
- einer Fernzugriffsfunktion zum Erlauben eines Fernzugriffs auf den Netzwerkknoten durch eine externe Vorrichtung;
- einer Netzwerkinformationsbereitstellungsfunktion zum Ermitteln und Bereitstellen von Netzwerkinformationen, die sich auf die Netzwerkknoten, die derzeit Teil des drahtlosen Kommunikationsnetzwerks bilden, beziehen;
- einer Stellenbestimmungsfunktion zum Bestimmen einer ungefähren Stelle der Netzwerkdienstvorrichtung;
- einer Netzwerkknotenadditionsfunktion zum Verbinden eines oder mehrerer externer Knoten mit dem drahtlosen Kommunikationsnetzwerk, und
- einer Asset-Verfolgungsfunktion, zum Verfolgen einer Position einer oder mehrerer Zielvorrichtungen unter Verwendung von Bakensignalen, die durch die Zielvorrichtungen gemäß einem zuvor bestimmten Kommunikationsprotokoll bereitgestellt werden.
- einer Innenaufstellungsdienstfunktion unter Verwendung von Bakensignalen, die durch die Netzwerkvorrichtungen bereitgestellt werden.

8. Drahtloses Kommunikationsnetzwerk (350), umfassend:
- mindestens eine Knotensteuereinheit (100) nach einem der Ansprüche 1 bis 5;
- einen oder mehrere Netzwerkknoten (304), umfassend eine Betriebseinheit, die konfiguriert ist, um das erste Modus-umschalten von der Knotensteuereinheit zu empfangen und um in dem ersten Betriebsmodus oder in dem zweiten Betriebsmodus in Abhängigkeit davon in Betrieb zu sein; und
- mindestens eine drahtlose Netzwerkdienstvorrichtung (300).

9. Drahtloses Kommunikationsnetzwerk nach Anspruch 8, ferner umfassend:
- eine Netzwerksteuervorrichtung (306), die konfiguriert ist, um an die mindestens eine Netzwerkdienstvorrichtung Sicherheitsberechtigungsnachweisdaten bereitzustellen, die eine Erlaubnis, dem drahtlosen Zielkommunikationsnetzwerk beizutreten, angeben; und wobei
- die Netzwerkdienstvorrichtung konfiguriert ist, um das Verbindungsanforderungssignal unter Verwendung der empfangenen Sicherheitsberechtigungsnachweisdaten bereitzustellen.

10. Verfahren (400) zum Betreiben einer Knotensteuereinheit zum Einstellen eines Betriebsmodus eines oder mehrerer Netzwerkknoten eines drahtlosen Kommunikationsnetzwerks, das Verfahren umfassend:
- Ermitteln (402), dass eine oder mehrere Netzwerkdienstvorrichtungen, die derzeit extern des drahtlosen Kommunikationsnetzwerks sind, derzeit für die Kommunikation mit mindestens einem der Netzwerkknoten des drahtlosen Kommunikationsnetzwerks verfügbar sind und Bereitstellen eines Dienstverfügbarkeitssignals, das dieses angibt;
- als Reaktion auf das Empfangen (404) des Dienstverfügbarkeitssignals;
- Erzeugen und Bereitstellen (406) eines ersten Modus-umschalten-Signals, das eine Anweisung angibt, den Betriebsmodus des mindestens einen Netzwerkknotens von einem ersten Betriebsmodus des mindestens einen Netzwerkknotens als einen Netzwerkknoten des drahtlosen Kommunikationsnetzwerks in einer ersten Netzwerkkonfiguration, der die Netzwerkdienstvorrichtung ausschließt, in einen zweiten Betriebsmodus des mindestens einen Netzwerkknotens als einen Netzwerkknoten des drahtlosen Kommunikationsnetzwerks in einer zweiten Netzwerkkonfiguration, die mindestens eine Netzwerkdienstvorrichtung einschließt, umzuschalten, wobei die eine oder die mehreren Netzwerkdienstvorrichtungen (106) konfiguriert sind, um in Kommunikation mit dem einen oder den mehreren Netzwerkknoten (102), die in dem zweiten Betriebsmodus in Betrieb sind, eine Inbetriebnahmefunktion mindestens eines Netzwerkknotens des drahtlosen Kommunikationsnetzwerks durchzuführen.

11. Verfahren (500) zum Betreiben eines Netzwerkknotens, umfassend;
- Durchführen des Verfahrens (400) nach Anspruch 10;
- Empfangen (502) des ersten Modus-umschalten-Signals;
- Betreiben (504) des Netzwerkknotens in dem ersten Betriebsmodus oder in dem zweiten Betriebsmodus in Abhängigkeit von dem ersten Modus-umschalten-Signal.

12. Computerprogramm, umfassend Anweisungen, die, wenn das Programm durch einen Computer ausgeführt wird, den Computer veranlassen, das Verfahren nach einem der Ansprüche 10 bis 11 vorzunehmen.

## Revendications

1. Unité de commande de noeud (100) destinée à un noeud de réseau et permettant de définir un mode de fonctionnement d'un ou plusieurs noeuds de réseau (102) d'un réseau de communication sans fil (150), l'unité de commande de noeud comprenant :
- une unité de détection de service de réseau (104), qui est configurée pour vérifier une disponibilité actuelle d'un ou plusieurs dispositifs de service de réseau (106), qui sont actuellement externes au réseau de communication sans fil, pour une communication avec au moins l'un parmi les noeuds de réseau du réseau de communication sans fil et pour devenir ainsi une partie du réseau de communication sans fil, et pour fournir un signal de disponibilité de service respectif (SA) indiquant ceci ;
- une unité de définition de mode de fonctionnement (108) configurée pour commander la commutation d'un mode de fonctionnement d'au moins l'un parmi les noeuds de réseau du réseau de communication sans fil entre :
- un premier mode de fonctionnement (OM1) de l'au moins un noeud de réseau en tant que noeud de réseau du réseau de communication sans fil dans une première configuration de réseau, qui exclut le dispositif de service de réseau respectif du réseau de communication sans fil ; et
- un second mode de fonctionnement (OM2) de l'au moins un noeud de réseau en tant que noeud de réseau du réseau de communication sans fil dans une seconde configuration de réseau, qui comporte un dispositif de service de réseau respectif dans le réseau de communication sans fil ; dans laquelle le ou les dispositifs de service de réseau (106) sont configurés pour réaliser en communication avec le ou les noeuds de réseau (102), fonctionnant dans le second mode de fonctionnement, une fonction de mise en service d'au moins un noeud de réseau du réseau de communication sans fil ;
dans laquelle
- l'unité de définition de mode de fonctionnement (108) est en outre configurée, en réponse à la réception du signal de disponibilité de service respectif (SA), pour générer et pour fournir, par l'intermédiaire d'une interface de sortie (110), un premier signal de mode de commutation correspondant (SM1) à au moins l'un parmi le ou les noeuds de réseau du réseau de communication sans fil, le premier signal de mode de commutation (SM1) indiquant une instruction pour commuter le mode de fonctionnement de l'au moins un noeud de réseau du premier mode de fonctionnement au second mode de fonctionnement par rapport au dispositif de service de réseau donné.

2. Unité de commande de noeud selon la revendication 1, dans laquelle l'unité de définition de mode de fonctionnement est en outre configurée :
- pour vérifier des informations d'autorisation de service indiquant un ou plusieurs dispositifs de service de réseau qui sont capables de se connecter à au moins un noeud de réseau du réseau de communication sans fil et qui sont autorisés à rejoindre le réseau de communication sans fil ;
- pour déterminer, à l'aide des informations d'autorisation de service, si le ou les dispositifs de service de réseau actuellement disponibles pour communiquer avec au moins l'un parmi les noeuds de réseau du réseau de communication sans fil sont des dispositifs de service de réseau autorisés à entrer dans le réseau de communication sans fil, et pour fournir un signal d'autorisation indiquant ceci ; et
- pour fournir le premier signal de mode de commutation en fonction également du signal d'autorisation.

3. Unité de commande de noeud selon la revendication 1 ou 2, dans laquelle :
- l'unité de détection de service de réseau est configurée pour déterminer si au moins l'un parmi les dispositifs de service de réseau est actuellement connecté au réseau de communication sans fil et pour fournir un signal connecté au service respectif indiquant ceci ; et dans laquelle
- l'unité de définition de mode de fonctionnement est configurée pour fournir à au moins l'un parmi les noeuds du réseau de communication sans fil, par l'intermédiaire de l'interface de sortie, un second signal de mode de commutation (SM2) indiquant une instruction pour commuter le mode de fonctionnement de l'au moins un noeud de réseau du second mode de fonctionnement (OM2) au premier mode de fonctionnement (OM1) lorsque le signal connecté de service respectif indique que le dispositif de service de réseau n'est pas actuellement connecté au réseau de communication.

4. Unité de commande de noeud selon l'une quelconque des revendications précédentes, comprenant en outre :
- une unité de vérification de données d'identification de noeud configurée pour vérifier des données d'identification de noeud indiquant au moins l'un parmi les noeuds de réseau qui font actuellement partie du réseau de communication sans fil ;
- une unité de stockage configurée pour stocker les données d'identification de noeud vérifiées ; et
- une unité de mise à jour de dispositif de service de réseau qui est configurée pour fournir, lors de la réception d'une instruction d'activation prédéterminée, les données d'identification de noeud stockées au dispositif de service de réseau.

5. Unité de commande de noeud selon l'une quelconque des revendications précédentes, comprenant en outre :
- une unité de vérification de données de fonctionnement de réseau configurée pour vérifier des données de fonctionnement de réseau indiquant des processus de communication entre les noeuds de réseau et un premier dispositif de service de réseau qui est connecté au réseau de communication sans fil ;
- une unité de stockage configurée pour stocker les données de fonctionnement de réseau vérifiées ; et
- une unité de mise à jour de dispositif de service de réseau configurée pour, lors de la réception d'une instruction d'activation prédéterminée, fournir les données de fonctionnement de réseau stockées à un second dispositif de service de réseau différent du premier dispositif de service de réseau.

6. Noeud de réseau (120) comprenant ;
- une unité de commande de noeud (100) selon l'une quelconque des revendications précédentes ;
- une unité de fonctionnement de noeud (112) pouvant fonctionner dans le premier et le second mode de fonctionnement, l'unité de fonctionnement de noeud étant configurée pour recevoir le premier signal de mode de commutation depuis l'unité de commande de noeud et pour fonctionner dans le premier mode de fonctionnement ou dans l'au moins un second mode de fonctionnement par rapport à un dispositif de service de réseau disponible respectif en fonction de celui-ci ;
dans lequel l'unité de fonctionnement de noeud (112) est configurée pour réaliser, lors du fonctionnement dans le second mode de fonctionnement, une fonction de mise en service d'au moins un noeud de réseau du réseau de communication sans fil.

7. Noeud de réseau selon la revendication 6, dans lequel l'unité de fonctionnement de noeud est configurée pour réaliser, lorsqu'elle fonctionne dans le second mode de fonctionnement, une ou plusieurs des fonctions suivantes :
- une fonction de validation de noeud pour valider une connexion correcte d'au moins un noeud de réseau au réseau de communication sans fil conformément à un critère de connexion prédéterminé ;
- une fonction de validation de configuration pour valider une configuration correcte d'au moins un noeud de réseau du réseau de communication sans fil conformément à un critère de configuration prédéterminé ;
- une fonction de mise à jour de logiciel pour mettre à jour un logiciel utilisé par au moins un noeud de réseau du réseau de communication sans fil ;
- une fonction de mise à jour de micrologiciel pour mettre à jour un micrologiciel utilisé par au moins un noeud de réseau du réseau de communication sans fil ;
- une fonction de configuration de mise au point pour ajuster des paramètres de fonctionnement d'au moins un noeud de réseau du réseau de communication sans fil dans le premier ou le second mode de fonctionnement ;
- une fonction de surveillance d'utilisation de noeud de réseau, pour déterminer, pendant un intervalle de temps prédéterminé, et fournir une quantité d'informations d'utilisation de noeud indiquant un temps de fonctionnement cumulé et une largeur de bande de réseau consommée d'au moins un noeud de réseau du réseau de communication sans fil ;
- une fonction de surveillance de fonctionnement de réseau pour déterminer, pendant un intervalle de temps prédéterminé, et fournir une quantité de fonctionnement de réseau indiquant un taux d'erreur de communication au sein du réseau de communication sans fil ;
- une fonction de test de fonctionnement de noeud, pour tester une fonctionnalité de fonctionnement prédéterminée d'au moins l'un parmi les noeuds du réseau de communication sans fil
- une fonction de surveillance de cybersécurité de réseau pour surveiller des motifs de trafic au sein du réseau de communication sans fil et détecter des motifs de trafic cibles indiquant une présence d'un noeud indésirable conformément à un algorithme de détection de noeud indésirable prédéterminé ;
- une fonction de détection de présence pour détecter la présence d'un sujet dans un volume de détection de présence associé au réseau de communication sans fil, la fonction de détection de présence comportant la détermination de valeurs d'indicateur de qualité de signal reçues ;
- une fonction d'accès à distance pour autoriser un accès à distance au noeud de réseau par un dispositif externe ;
- une fonction de fourniture d'informations de réseau pour vérifier et fournir des informations de réseau se rapportant aux noeuds de réseau faisant actuellement partie du réseau de communication sans fil ;
- une fonction de détermination de position, pour déterminer une position approximative du dispositif de service de réseau ;
- une fonction d'addition de noeud de réseau, pour connecter un ou plusieurs noeuds externes au réseau de communication sans fil, et
- une fonction de suivi d'actif, pour suivre l'emplacement d'un ou plusieurs dispositifs cibles à l'aide des signaux de balise fournis par les dispositifs cibles conformément à un protocole de communication prédéterminé.
- une fonction de service de positionnement intérieur à l'aide des signaux de balise fournis par les dispositifs de réseau.

8. Système de communication sans fil (350) comprenant :
- au moins une unité de commande de noeud (100) selon l'une quelconque des revendications 1 à 5 ;
- un ou plusieurs noeuds de réseau (304) comprenant une unité de fonctionnement configurée pour recevoir le premier mode de commutation depuis l'unité de commande de noeud et pour fonctionner dans le premier mode de fonctionnement ou dans le second mode de fonctionnement en fonction de celui-ci ; et
- au moins un dispositif de service de réseau sans fil (300).

9. Réseau de communication sans fil selon la revendication 8, comprenant en outre :
- un dispositif de commande de réseau (306) configuré pour fournir à l'au moins un dispositif de service de réseau des données de justificatif de sécurité indiquant une autorisation de rejoindre le réseau de communication sans fil cible ; et dans lequel
- le dispositif de service de réseau est configuré pour fournir le signal de demande de connexion à l'aide des données de justificatif de sécurité reçues.

10. Procédé (400) de fonctionnement d'une unité de commande de noeud pour définir un mode de fonctionnement
d'un ou plusieurs noeuds de réseau d'un réseau de communication sans fil, le procédé comprenant :
- la vérification (402) du fait qu'un ou plusieurs dispositifs de service de réseau, qui sont actuellement externes au réseau de communication sans fil sont actuellement disponibles pour une communication avec au moins l'un parmi les noeuds de réseau du réseau de communication sans fil et fournir un signal de disponibilité de service indiquant ceci ;
- en réponse à la réception (404) du signal de disponibilité de service ;
- la génération et la fourniture (406), d'un premier signal de mode de commutation indiquant une instruction pour commuter le mode de fonctionnement de l'au moins un noeud de réseau d'un premier mode de fonctionnement de l'au moins un noeud de réseau en tant que noeud de réseau du réseau de communication sans fil dans une première configuration de réseau, qui exclut le dispositif de service de réseau à un second mode de fonctionnement de l'au moins un noeud de réseau en tant que noeud de réseau du réseau de communication sans fil dans une seconde configuration de réseau, qui comporte l'au moins un dispositif de service de réseau ; dans lequel le ou les dispositifs de service de réseau (106) sont configurés pour réaliser en communication avec le ou les noeuds de réseau (102), fonctionnant dans le second mode de fonctionnement, une fonction de mise en service d'au moins un noeud de réseau du réseau de communication sans fil.

11. Procédé (500) de fonctionnement d'un noeud de réseau, comprenant :
- la réalisation du procédé (400) selon la revendication 10 ;
- la réception (502) du premier signal de mode de commutation ;
- le fonctionnement (504) du noeud de réseau dans le premier mode de fonctionnement ou dans le second mode de fonctionnement en fonction du premier signal de mode de commutation.

12. Programme informatique comprenant des instructions qui, lorsque le programme est exécuté par un ordinateur, amènent l'ordinateur à effectuer le procédé selon l'une quelconque des revendications 10 à 11.
